Europäisches Patentamt

European Patent Office

Office européen des brevets

(19)

(11) Veröffentlichungsnummer : **0 093 687**
**B1**

# (12) EUROPÄISCHE PATENTSCHRIFT

(45) Veröffentlichungstag der Patentschrift :
07.08.85

(21) Anmeldenummer : 83730041.7

(22) Anmeldetag : 26.04.83

(51) Int. Cl.⁴ : **H 02 B 13/06**

(54) Druckgasisolierte Hochspannungsschaltanlage mit insbesondere einphasiger metallischer Kapselung.

(30) Priorität : 04.05.82 DE 3217186

(43) Veröffentlichungstag der Anmeldung :
09.11.83 Patentblatt 83/45

(45) Bekanntmachung des Hinweises auf die Patenterteilung : 07.08.85 Patentblatt 85/32

(84) Benannte Vertragsstaaten :
CH DE FR GB LI SE

(56) Entgegenhaltungen :
FR-A- 2 354 649
US-A- 4 142 230

(73) Patentinhaber : Siemens Aktiengesellschaft
Berlin und München Wittelsbacherplatz 2
D-8000 München 2 (DE)

(72) Erfinder : Lorenz, Dieter, Dipl.-Ing.
Gärtnerstrasse 1B
D-1000 Berlin 45 (DE)
Erfinder : Olsen, Willi, Ing. grad.
Am Laubwald 3
D-1000 Berlin 13 (DE)

EP 0 093 687 B1

## Beschreibung

Die Erfindung betrifft eine druckgasisolierte Hochspannungsschaltanlage mit insbesondere einphasiger metallischer Kapselung, bestehend aus Sammelschienensystemen und Schaltfeldern, von denen zumindest eines fest im Raum verankert ist, bei der im Zuge der Sammelschienensysteme Längenausdehnungskompensatoren mit Zugankern angeordnet sind. Eine solche druckgasisolierte Hochspannungsschaltanlage ist aus der Zeitschrift « Elektrie », 1977, Seiten 316 bis 321 (insbesondere Seite 317) bekannt.

Bei derartigen druckgasisolierten Hochspannungsschaltanlagen, die manchmal eine große Längenausdehnung aufweisen können, bestehen erhebliche Probleme hinsichtlich der thermischen Dehnung der Gehäuse der Sammelschienensysteme. Um mechanische Spannungen in den Gehäusen zu vermeiden, werden deshalb bestimmte Punkte der Hochspannungsschaltanlage fest im Raum verankert und bilden somit einen Festpunkt. Bei der bekannten Hochspannungsschaltanlage liegt dieser Festpunkt in der Mitte eines Schaltfeldes, das angenähert die Mitte der Anlage bildet und die mit ihm über die Gehäuse der Sammelschienensysteme verbundenen Teile sind auf dem Fundament gleitbar gelagert, so daß sie sich bei Längenänderungen der Gehäuse, hervorgerufen durch Temperaturveränderungen, insgesamt verschieben können. Dabei entstehen allerdings in den Schaltfeldern zusätzliche Belastungen der die Kapselung bildenden Gehäuse, die mit ungünstigen Hebelarmen, bezogen auf die Gleitpunkte des Feldes, auftreten. Bei der bekannten Anlage sind außerdem im Zuge der Sammelschienengehäuse Kompensatoren mit Zugankern angeordnet. Da die Zuganker den Kompensator jeweils überbrücken, kann bei dieser Anordnung der Kompensator nur die durch Toleranzen entstehenden Maßabweichungen zwischen den einzelnen Schaltfeldern ausgleichen.

Es ist ferner auch bekannt (Prospekt der Firma COQ C-P-76-2E), die Kompensatoren so in die Gehäuse der Sammelschiene einzubauen, daß sie Längenausdehnungen aufnehmen. In diesem Fall werden im Hinblick auf den Gasdruck im Kapselungsrohr die Zuganker zwischen Festpunkten der Anlage so angeordnet, daß sie die Kompensatoren überbrücken. Dabei ist aber zu beachten, daß die Zuganker nicht nur für den betriebsmäßigen Gasdruck zu berechnen sind, sondern auch der Störlichtbogenfall mit einem Druckanstieg auf den dreifachen Wert berücksichtigt werden muß. Ein weiteres Problem ergibt sich für lange Zuganker in druckgasisolierten Anlagen beim Evakuieren der Gasräume im Zusammenhang mit Montage und Wartungsarbeiten, wobei eine Knickbeanspruchung auf den Kompensator einwirkt. Außerdem führt die Eigendehnung der Zuganker zu zusätzlichen Belastungen der Festpunkte.

Insbesondere in Wasserkraftwerken mit Turbinen- und Schaltfeldabständen in der Größenordnung von 40 bis 50 m und Sammelschienenlängen mit mehreren hundert Metern sind die bekannten Kompensatoren-Zuganker-Anordnungen nur mit zusätzlichen kostenintensiven technischen Maßnahmen anwendbar. Der Erfindung liegt die Aufgabe zugrunde, durch eine besondere konstruktive Ausgestaltung derartiger druckgasisolierter gekapselter Hochspannungsschaltanlagen die Längenausdehnungen der Gehäuse des Sammelschienensystems ohne großen Aufwand so aufzunehmen, daß keine wesentlichen mechanischen Spannungen in der Anlage auftreten.

Zur Lösung dieser Aufgabe ist eine druckgasisolierte Hochspannungsschaltanlage der eingangs beschriebenen Art gemäß der Erfindung so ausgebildet, daß bei einer Anlage, bei der alle Abzweige der Schaltfelder fest im Raum verankert sind, jede Phase der Sammelschienensysteme in Abschnitte mit zwei parallelen Längsachsen so unterteilt ist, daß jeweils zwischen drei aufeinanderfolgenden Abzweigen mindestens zwei aufeinanderfolgende Abschnitte unterschiedlicher Längsachse liegen, daß zwischen benachbarten Abschnitten gleicher Phase besondere, ebenfalls fest im Raum verankerte doppel-T-förmige Verbindungsgehäuse angeordnet sind und daß bei jedem Abschnitt der Sammelschiene zumindest an einem der beiden, an den Enden befindlichen Verbindungsgehäusen an beiden in der Längsachse des Abschnittes liegenden Anschlußflanschen dieses Verbindungsgehäuses je ein Längenausdehnungskompensator angeordnet ist und Zuganker, die, von den Außenflanschen der Längenausdehnungskompensatoren ausgehend, diese und das Verbindungsgehäuse überbrücken.

In der gemäß der Erfindung ausgebildeten druckgasisolierten Hochspannungsanlage verlaufen also die Sammelschienenphasen nicht mehr in hintereinanderliegenden Gehäusen mit einer einzigen Längsachse, sondern jede Phase des Sammelschienensystems ist in kürzere Abschnitte unterteilt, die vorzugsweise zwei parallel verlaufende Längsachsen haben und untereinander durch doppel-T-förmige Verbindungsgehäuse verbunden sind, die jeweils Festpunkte bilden. Da außerdem mindestens an einem Ende jedes Abschnittes beidseitig von dem in der Längsachse liegenden Teil des Verbindungsgehäuses Kompensatoren angeordnet sind, gleichen diese jeweils die in den Abschnitten auftretenden Längenänderungen aus. Die Kompensatoren brauchen nur für die verhältnismäßig geringe Längenänderung eines Abschnittes bemessen zu sein. Bei gleicher Länge der Abschnitte können daher die Kompensatoren gleiche Länge haben. Die Belastung aller Festpunkte ist gleich und liegt nur in der Größenordnung der aus den Federkonstanten der Kompensatoren resultierenden Kräfte. Auch die von den Außenflanschen der Kompensatoren ausgehenden, diese und das Verbindungsgehäuse überbrückenden Zuganker sind kurz und ihre Länge ist unabhängig von der Längenausdehnung des Sammelschienensystems und der Anzahl der Feldfestpunkte. Außerdem wird auch die Eigendehnung der Zuganker durch die Kompensatoren aufgenommen.

Diese Unterteilung der Sammelschienengehäuse in Abschnitte mit parallelen Längsachsen erfordert aber praktisch keinen zusätzlichen Raum, so daß der Gesamtaufwand für die Anlage unter anderem an Fläche bzw. Gebäuden oder Fundamenten gering gehalten ist.

Es ist vorteilhaft, daß die Länge der Abschnitte des Sammelschienensystems jeweils dem Abstand zwischen benachbarten Abzweigen gleichnamiger Phasen der Schaltfelder entspricht. Da sowohl die Abzweige der Schaltfelder als auch die Verbindungsgehäuse zwischen den Abschnitten fest im Raum verankert sind, können somit die Gehäuse für die Abzweige in einfachster Weise an den Verbindungsgehäusen befestigt werden. Je nach der geometrischen Anordnung der in den einzelnen Schaltfeldern enthaltenden Geräte können die Anschlußflansche für die Gehäuse der Abzweige entweder am in der Längsachse der Sammelschiene liegenden Teil des Verbindungsgehäuses angeordnet sein oder am Steg, dessen Achse in der Ebene der Sammelschienenlängsachsen rechtwinklig zur Sammelschiene verläuft.

Es empfiehlt sich, das Verbindungsgehäuse jeweils über eine druck- und lichtbogenfeste Schottdurchführung mit dem Abschnitt des Sammelschienensystems zu verbinden.

Außerdem kann mit Vorteil das Verbindungsgehäuse auch im Steg mit einer druck- und lichtbogenfesten Schottdurchführung versehen sein. Dadurch wird erreicht, daß beim Auftreten eines Störlichtbogens in diesem Knotenpunkt jeweils nur ein abgehender Sammelschienenabschnitt betroffen ist, während bei den bisher üblichen Abzweigen mit maximal zwei Durchführungen beide Sammelschienenabschnitte repariert werden mußten.

Zur Beherrschung sehr großer Dehnungen können bei den Sammelschienenabschnitten auch auf beiden Seiten benachbart zum Verbindungsgehäuse Kompensatoren eingebaut werden. Um eine gleichmäßige Aufteilung der aufzunehmenden Dehnung auf diese Kompensatoren zu erreichen, die unterschiedliche Federkonstanten haben können, empfiehlt es sich, die Mitte des Abschnittes fest im Raum zu verankern. Es ist aber auch möglich, an einem der beiden Verbindungsgehäuse einen Begrenzungsanschlag für die Bewegung der Kompensatoren vorzusehen.

Im folgenden sei die Erfindung noch anhand der in den Fig. 1 bis 16 der Zeichnung dargestellten Ausführungsbeispiele näher erläutert.

Die Fig. 1 und 3 bis 6 zeigen, jeweils schematisch dargestellt, eine Ansicht einer Phase eines Sammelschienensystems und die Verbindungsgehäuse.

Fig. 2 zeigt eine Seitenansicht der drei Phasen. In den Fig. 7 bis 16 sind jeweils verschiedene Möglichkeiten des Anschlusses der Abzweige der Schaltfelder, sowohl schematisch als auch in Ansicht, dargestellt, durch welche sich verschiedene Lagen der Sammelschienenabschnitte ergeben. Für gleiche Teile sind jeweils die gleichen Bezugszahlen beibehalten worden.

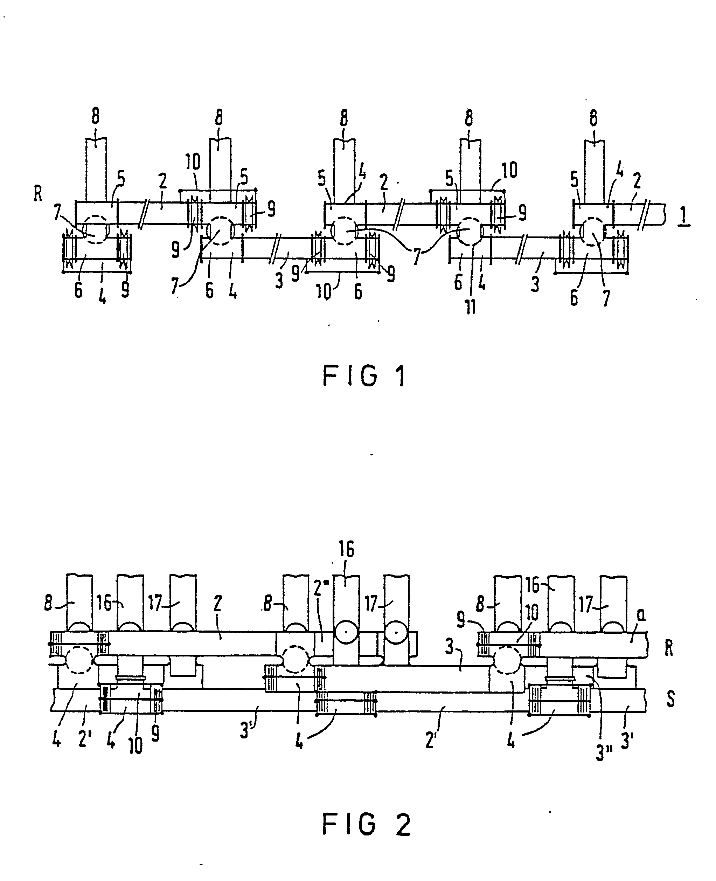

Die Fig. 1 zeigt die Phase R eines Sammelschienensystems 1 einer gekapselten, druckgasisolierten Hochspannungsschaltanlage, die sich aus Abschnitten 2 und 3 von Gehäusen für die Sammelschienen mit zwei parallel verlaufenden Längsachsen zusammensetzt. An den Enden dieser Abschnitte 2 und 3 liegen jeweils doppel-T-förmige Verbindungsgehäuse 4, welche die Abschnitte 2 und 3 von Gehäusen mit zwei parallelen Längsachsen untereinander verbinden. Jedes Verbindungsgehäuse 4 weist einen Teil 5 auf, der sich in der Längsachse des Abschnittes 2 befindet und einen parallel dazu verlaufenden Teil 6, dessen Längsachse der des Abschnittes 3 entspricht. Diese Teile 5, 6 sind durch einen Steg 7 verbunden, dessen Achse in der Ebene der Sammelschienenlängsachsen rechtwinklig zu den Sammelschienen verläuft. An diesem Steg 7 sind mittig die Gehäuse der Abzweige 8 der Schaltfelder angeschlossen, die, kurz abgebrochen, nur angedeutet sind.

In den Abschnitten 2 sind jeweils an einem Ende an den Anschlußflanschen des Teils 5 des Verbindungsgehäuses 4 Kompensatoren 9 angeordnet. Diese Kompensatoren 9 und der Teil 5 des Verbindungsgehäuses 4 sind von Zugankern 10 überbrückt, die jeweils von den Außenflanschen der Kompensatoren 9 ausgehen. Auch in den Abschnitten 3 sind jeweils an einem Ende seitlich von den Teilen 6 des Verbindungsgehäuses 4 Kompensatoren 9 angeordnet, die ebenfalls von Zugankern 10 überbrückt sind. Diese Kompensatoren 9 können die Längsdehnungen der Abschnitte 2 und 3 aufgrund von Temperaturveränderungen aufnehmen. Da jedem Abschnitt 2 bzw. 3 jeweils zwei Kompensatoren 9 zugeordnet sind, und die Abschnitte 2 und 3 gleiche Länge aufweisen, können die Kompensatoren 9 untereinander gleich ausgebildet sein. Die Länge der Zuganker 10 ist gering. Auf diese Weise ist es unerheblich, wie groß insgesamt die Länge der Phase R des Sammelschienensystems 1 ist, da jeweils nur die Längendehnung eines Abschnittes 2 bzw. 3 durch die Kompensatoren 9 aufgenommen zu werden braucht. Entsprechend gering ist ihre Beanspruchung, sowie die der Zuganker 10. Da die Verbindungsgehäuse 4 fest im Raum verankert sind und somit Festpunkte bilden, ist außerdem die Belastung sämtlicher Festpunkte gleich und liegt nur in der Größenordnung der aus den Federkonstanten der Kompensatoren 9 resultierenden Kräfte.

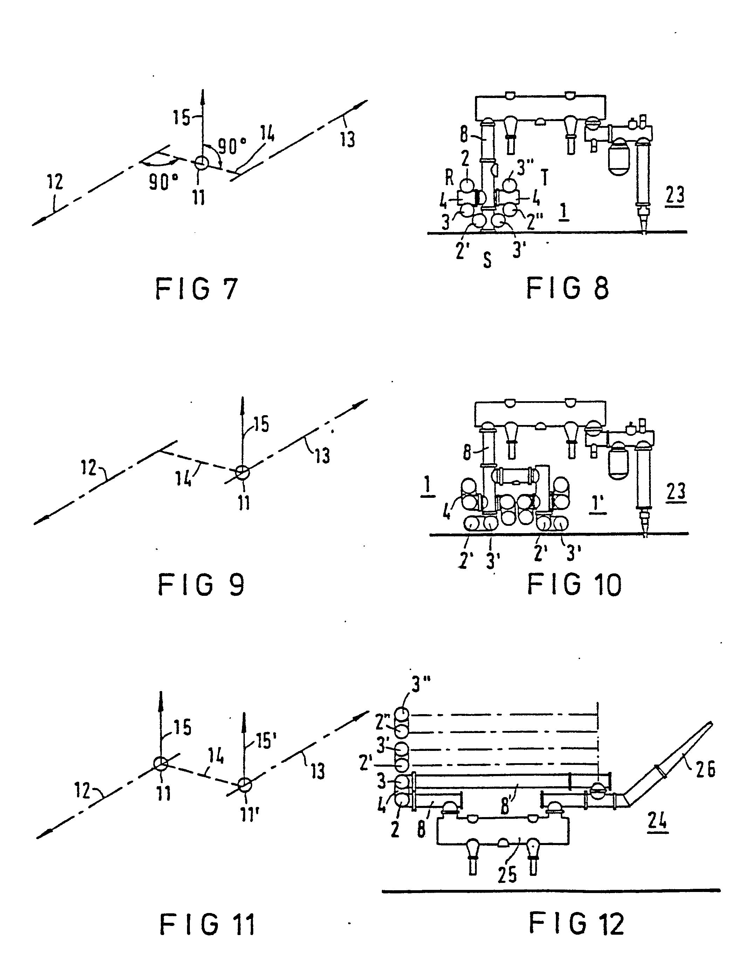

Bei der in Fig. 1 gezeigten mittigen Lage des Abzweigpunktes 11 der Gehäuse der die gleichnamigen Phasen der Schaltfelder bildenden Abzweige 8 ergibt sich die in Fig. 7 dargestellte Zuordnung der Längsachse 12 des Abschnittes 2 und der Längsachse 13 des Abschnittes 3 des Sammelschienensystems 1 zu der Achse 14 des Steges 7 des Verbindungsgehäuses 4 und zur Achse 15 des Abzweiges 8. Dies ergibt eine Anordnung der Abschnitte 2, 2', 2" und 3, 3', 3" der einzelnen Phasen R, S, T zueinander, wie sie in der Fig. 8 und in der Fig. 2 dargestellt sind. Die Abzweige der Phase S der Schaltfelder sind mit 16, die der Phase T mit 17 bezeichnet.

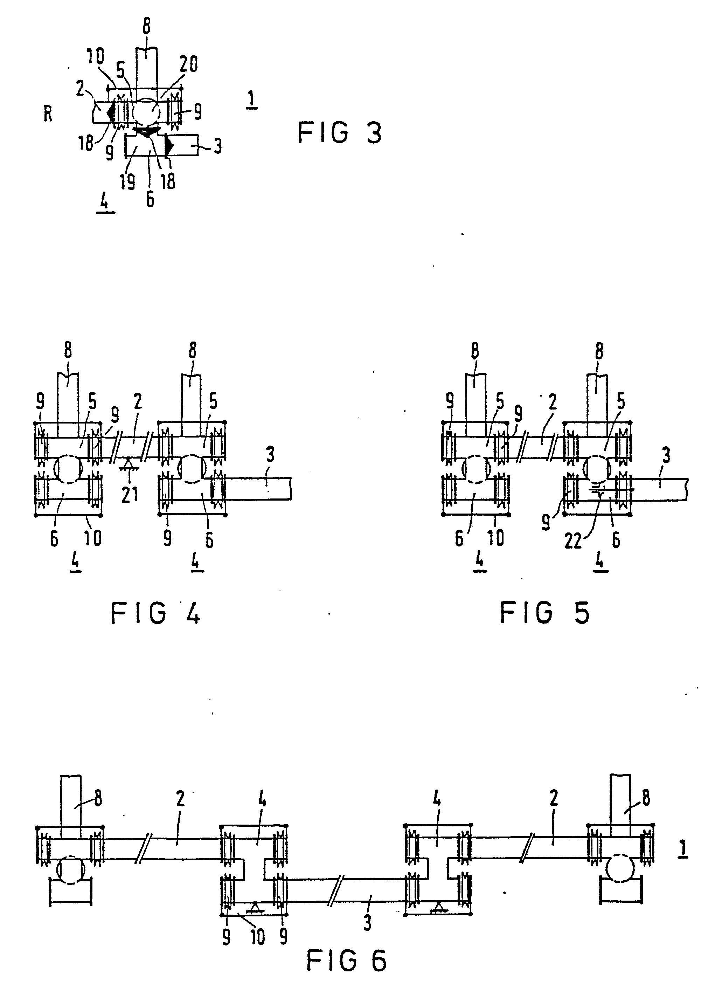

Fig. 3 zeigt ein Verbindungsgehäuse 4 zwischen den Abschnitten 2 und 3 der Phase R des Sammelschienensystems 1 einer gekapselten, druckgasisolierten Hochspannungsschaltanlage. An beiden Seiten des Teiles 5 des Verbindungsgehäuses 4 im Zuge der Längsachse des Abschnittes 2 liegen Kompensatoren 9, die durch Zuganker 10 überbrückt sind. Außerdem ist der Anschlußflansch zum Abschnitt 2 als druck- und lichtbogenfeste Schottdurchführung 18 ausgebildet, ebenso wie der Anschlußflansch zwischen dem Abschnitt 3 und dem Teil 6 des Verbindungsgehäuses 4. Eine weitere druck- und lichtbogenfeste Schottdurchführung 18 liegt im Steg 7. Dadurch entstehen im Verbindungsgehäuse 4 zwei Schotträume 19, 20, so daß in dem Fall, daß im Verbindungsgehäuse 4 ein Störlichtbogen entsteht, jeweils nur ein abgehender Sammelschienenabschnitt 2 oder 3 betroffen ist und eine entsprechende Reparatur vorgenommen werden kann, ohne daß am zweiten Sammelschienenabschnitt Reparaturarbeiten ausgeführt werden müssen.

In den Fig. 4 und 5 ist jeweils ein Sammelschienensystem 1 dargestellt, bei dem die Länge der einzelnen Abschnitte 2 bzw. 3, die jeweils zwischen zwei Abzweigen 8 der Schaltfelder liegen, verhältnismäßig groß ist, was durch den zweifachen Schnitt angedeutet ist. In diesem Fall ist es zur Aufnahme der Längendehnungen günstig, daß auf beiden Enden der Abschnitte beidseitig zu den Teilen 5 und 6 der Verbindungsgehäuse 4 Kompensatoren 9 angeordnet sind, die durch Zuganker 10 überbrückt werden. Da jedoch infolge von Fertigungstoleranzen auch die Federkonstanten von Kompensatoren 9 gleicher Abmessungen unterschiedlich ausfallen können, sind bei dem Ausführungsbeispiel gemäß Fig. 4 nicht nur die Verbindungsgehäuse 4 jeweils fest im Raum verankert, sondern in der Mitte der Abschnitte 2 bzw. 3 ist jeweils noch ein weiterer Festpunkt 21 vorgesehen. Bei dem Ausführungsbeispiel nach Fig. 5 ist anstelle eines derartigen Festpunktes 21 in einem der beiden Verbindungsgehäuse 4 ein Begrenzungsanschlag 22 für die Bewegung der Kompensatoren 9 vorgesehen, welcher die Dehnung der Kompensatoren 9 auf die zulässige Größe begrenzt.

Es ist aber auch möglich, daß der Abstand zwischen zwei gleichphasigen Abzweigen 8 der Schaltfelder bei einem Sammelschienensystem 1 so groß wird, daß die Längenänderungen bei den üblichen Temperaturdifferenzen nicht mehr von allein vier Kompensatoren 9 aufgenommen werden kann. Ein derartiges Ausführungsbeispiel zeigt Fig. 6. Hier sind deshalb die Längen der zwischen den beiden benachbarten Abzweigen 8 liegenden Abschnitte 2 und 3 des Sammelschienensystems 1 so gewählt, daß zwischen beiden Abzweigen 8 mehrere, hier drei Abschnitte 2, 3 vorgesehen sind. Auch diese sind untereinander durch Verbindungsgehäuse 4 mit seitlich angeordneten Kompensatoren 9, die mit Zugankern 10 überbrückt sind, verbunden. Auch die Verbindungsgehäuse 4, die nicht mit einem Abzweig 8 verbunden sind, sind fest im Raum verankert und bilden somit Festpunkte im Zuge des Sammelschienensystems 1 noch zwischen den Abzweigen 8, die ebenfalls, wie die mit ihnen verbundenen Verbindungsgehäuse 4 fest im Raum verankert sind. Man kann somit die Längen der einzelnen Abschnitte 2 bzw. 3 des Sammelschienensystems 1 mit parallel verlaufenden Längsachsen jeweils nach der gewünschten Größe der einzusetzenden Kompensatoren 9 so wählen, daß alle möglichen Längenausdehnungen aufgenommen werden können, unabhängig von dem Abstand zwischen benachbarten Abzweigen 8.

Die verschiedenen unterschiedlichen Lagen der Abzweigpunkte 11 von Schaltfeldern in Bezug auf die Längsachsen 12 und 13 der Abschnitte 2, 2', 2" und 3, 3', 3" der drei Phasen R, S, T eines Sammelschienensystems 1 sind in den Fig. 7 bis 16 schematisch und anhand von Ansichten verschiedener Schaltfelder dargestellt. Diese Ausführungsbeispiele zeigen deutlich, daß durch die Unterteilung der Phasen R, S, T des Sammelschienensystems 1 in Abschnitte 2, 3 mit unterschiedlichen, parallel verlaufenden Längsachsen 12, 13 der Gehäuse kaum ein wesentlich größerer Raumbedarf für die Hochspannungsschaltanlage entsteht, sondern daß vielmehr alle Sammelschienenabschnitte 2, 3 in dem vom Schaltfeld umschlossenen Raum untergebracht werden können.

So ist in den Fig. 7, 8 ein Kabelanschlußfeld 23 gezeigt, mit einem einzigen Sammelschienensystem 1, das jeweils in zwei Abschnitte 2, 3 aufgeteilt ist. Dabei sind die Gehäuse der Abzweige 8 jeweils mittig an den Steg der Verbindungsgehäuse 4 angeflanscht.

Wird dagegen der Abzweig 8 des gleichen Kabelanschlußfeldes 23, wie in den Fig. 9, 10 dargestellt, an einem in Richtung der Längsachse 13 des Abschnittes 3 liegenden Teil des Verbindungsgehäuses 4 angeflanscht, so können im gleichen Raum sogar zwei parallele Sammelschienensysteme 1, 1' untergebracht werden.

Die Fig. 12, 14, 16 zeigen jeweils ein Freileitungsanschlußfeld 24, bei denen der eine Abschnitt 2, 2', 2" des Sammelschienensystems über den Abzweigungspunkt 11 mit dem Abzweig 8, dessen Gehäuse an dem in der Längsachse 12 liegenden Teil des Verbindungsgehäuses 4 angeflanscht ist, mit einem Leistungsschalter 25 verbunden ist. Ein weiterer Abzweig 8' ist an dem in der Längsachse 13 liegenden Teil des Abschnittes 3, 3', 3" angeflanscht und bildet Verbindungselemente (Bypaß) zum Freileitungsanschluß 26.

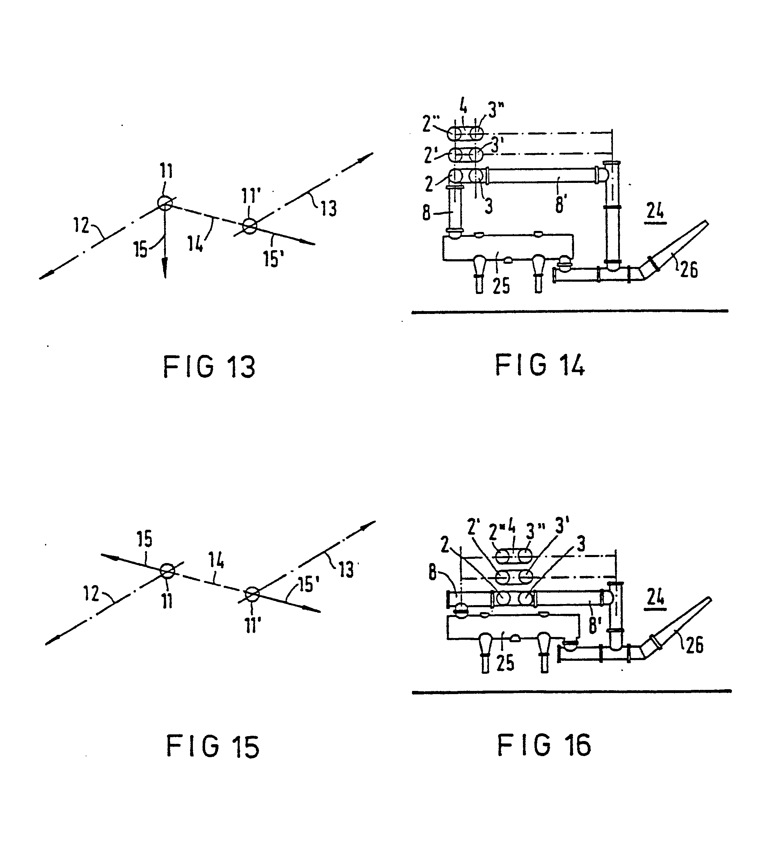

Die Abzweigachsen 15, 15' können bei diesen Schaltfeldern 24 jeweils in verschiedenen Richtungen verlaufen, wodurch sich für die gegenseitige Lage der Abschnitte 2, 3 der Phasen R, S, T des Sammelschienensystems 1 jeweils unterschiedliche Anordnungen ergeben. So zeigen die Fig. 11 und 12 parallel zueinander verlaufenden Abzweigachsen 15, 15' der Abzweige 8, 8', die senkrecht zu der Ebene der Abschnittslängsachsen 12, 13 stehen. In den Fig. 13, 14 steht nur die Abzweigachse 15 senkrecht zu der Ebene der Abschnittslängsachsen 12, 13 und die Abzweigachse 15' verläuft in der Verlängerung der Achse 14 des Steges des Verbindungsgehäuses 4. Bei den Ausführungsbeispielen gemäß Fig. 15 und 16 liegen beide Abzweigachsen 15, 15' jeweils in der Verlängerung der Achse 14 des Steges des Verbindungsgehäuses 4.

**Patentansprüche**

1. Druckgasisolierte Hochspannungsschaltanlage mit insbesondere einphasiger metallischer Kapselung, bestehend aus Sammelschienensystemen und Schaltfeldern, von denen zumindest eines fest im Raum verankert ist, bei der im Zuge der Sammelschienensysteme Längenausdehnungskompensatoren mit Zugankern angeordnet sind, dadurch gekennzeichnet, daß bei einer Anlage, bei der alle Abzweige (8, 16, 17) der Schaltfelder (23, 24) fest im Raum verankert sind, jede Phase (R, S, T) der Sammelschienensysteme (1, 1') in Abschnitte (2, 2', 2", 3, 3', 3") mit zwei parallelen Längsachsen (12, 13) so unterteilt ist, daß jeweils zwischen drei aufeinanderfolgenden Abzweigen (8, 16, 17) mindestens zwei aufeinanderfolgende Abschnitte (2, 3) unterschiedlicher Längsachse (12, 13) liegen, daß zwischen benachbarten Abschnitten (2, 3) gleicher Phase (R, S, T) besondere, ebenfalls fest im Raum verankerte doppel-T-förmige Verbindungsgehäuse (4) angeordnet sind und daß bei jedem Abschnitt (2, 3) der Sammelschiene zumindest an einem der beiden, an den Enden befindlichen Verbindungsgehäusen (4) an beiden in der Längsachse (12, 13) des Abschnittes (2, 3) liegenden Anschlußflanschen dieses Verbindungsgehäuses (4) je ein Längenausdehnungskompensator (9) angeordnet ist und Zuganker (10), die, von den Außenflanschen der Längenausdehnungskompensatoren (9) ausgehend, diese und das Verbindungsgehäuse (4) überbrücken.

2. Druckgasisolierte Hochspannungsschaltanlage nach Anspruch 1, dadurch gekennzeichnet, daß die Länge der Abschnitte (2, 3) des Sammelschienensystems (1) jeweils dem Abstand zwischen benachbarten Abzweigen (8, 16, 17) gleichnamiger Phasen der Schaltfelder (23, 24) entspricht.

3. Druckgasisolierte Hochspannungsschaltanlage nach Anspruch 1 oder 2, dadurch gekennzeichnet, daß die Anschlußflansche für die Gehäuse der Abzweige (8) am in der Längsachse (12, 13) der Sammelschiene liegenden Teil des Verbindungsgehäuses (4) angeordnet sind.

4. Druckgasisolierte Hochspannungsschaltanlage nach Anspruch 1, dadurch gekennzeichnet, daß das Verbindungsgehäuse (4) durch eine Gehäusekombination gebildet ist.

5. Druckgasisolierte Hochspannungsschaltanlage nach Anspruch 1 oder 4, dadurch gekennzeichnet, daß das Verbindungsgehäuse (4) jeweils über eine druck- und lichtbogenfeste Schottdurchführung (18) mit dem Abschnitt (2, 3) des Sammelschienensystems (1) verbunden ist.

6. Druckgasisolierte Hochspannungsschaltanlage nach Anspruch 1 oder 5, dadurch gekennzeichnet, daß das Verbindungsgehäuse (4) auch im Steg (7) eine druck- und lichtbogenfeste Schottdurchführung (18) aufweist.

7. Druckgasisolierte Hochspannungsschaltanlage nach Anspruch 1, dadurch gekennzeichnet, daß bei Längenausdehnungskompensatoren (9) an den Verbindungsgehäusen (4) auf beiden Seiten eines Abschnittes (2, 3) die Mitte des Abschnittes (2, 3) fest im Raum verankert ist.

8. Druckgasisolierte Hochspannungsschaltanlage nach Anspruch 1, dadurch gekennzeichnet, daß bei Längenausdehnungskompensatoren (9) an den Verbindungsgehäusen (4) auf beiden Seiten eines Abschnittes (2, 3) an einem der beiden Verbindungsgehäuse (4) ein Begrenzungsanschlag (22) für die Bewegung der Längenausdehnungskompensatoren (9) vorgesehen ist.

**Claims**

1. A compressed gas-insulated high-voltage switching arrangement, having a, in particular single-phase, metallic casing, consisting of bus bar systems and switching panels, at least one of which is firmly anchored in the space, wherein in the course of the bus bar system longitudinal expansion compensators having tie rods, are arranged, characterised in that with an arrangement in which all branches (8, 16, 17) of the switching panels are firmly anchored in the space, each phase (R, S, T) of the bus bar systems (1, 1') is divided into sections (2, 2', 2", 3, 3', 3") having two parallel longitudinal axes (12, 13) in such a way that at least two consecutive sections (2, 3) having different longitudinal axes (12, 13) are respectively arranged between three consecutive branches (8, 16, 17) ; that between adjacent sections (2, 3) of the same phase (R, S, T), individual double-T-shaped connecting casings (4), which are also firmly anchored in space, are arranged ; and that for each section (2, 3) of the bus bar, at least on one of the two connecting casings (4) which are present at the ends, at both coupling flanges of the connecting casing (4) which are arranged in the longitudinal axis (12, 13) of the section (2, 3), a longitudinal expansion compensator (9) is arranged, and tie rods (10) which, starting from the external flanges of the longitudinal expansion compensators (9), bridge over the latter and the connecting casing (4).

2. A compressed gas-insulated high-voltage switching arrangement as claimed in Claim 1, characterised in that the length of the sections (2, 3) of the bus bar system (1) in each case corresponds to the distance between adjacent branches (8, 16, 17) of similar phases of the switching panels (23, 24).

3. A compressed gas-insulated high-voltage switching arrangement as claimed in Claim 1 or Claim 2, characterised in that the coupling flange for the casings of the branches (8) is arranged on the part of the connecting casing (4) which is arranged on the longitudinal axis (12, 13) of the bus bar.

4. A compressed gas-insulated high-voltage switching arrangement as claimed in Claim 1, characterised in that the connecting casing (4) is formed by a casing combination.

5. A compressed gas-insulated high-voltage switching arrangement as claimed in Claim 1 or 4, characterised in that the connecting casing (4) is in each case connected to the section (2, 3) of the bus bar system (1) through a pressure-proof and arc-proof partition bushing (18).

6. A compressed gas-insulated high-voltage switching arrangement as claimed in Claim 1 or 5, characterised in that the connecting casing (4) also has a pressure-proof and arc-proof partition bushing in the cross-piece (7).

7. A compressed gas-insulated high-voltage switching arrangement as claimed in Claim 1, characterised in that for longitudinal expansion compensators (9) at the connecting casings (4) on either side of a section (2, 3), the centre of the section (2, 3) is firmly anchored in space.

8. A compressed gas-insulated high-voltage switching arrangement as claimed in Claim 1, characterised in that for longitudinal expansion compensators (9) at the connecting casings (4) on either side of a section (2, 3), a limiting stop (22) for the movement of the longitudinal expansion compensator (9) is arranged on one of the two connecting casings (4).

**Revendications**

1. Installation de distribution électrique haute tension à isolation par un gaz sous pression, avec, en particulier un blindage métallique monophasé, constituée par des systèmes de barres omnibus et par des plages de coupure, dont au moins l'une est ancrée de façon fixe dans l'espace, et dans laquelle des tirants d'ancrage à compensateurs de la dilatation longitudinale sont disposés dans le sens de l'extension des systèmes de barres omnibus, caractérisée par le fait que dans une installation dans laquelle toutes les dérivations (8, 16, 17) des plages de coupure (23, 24) sont ancrées de façon fixe dans l'espace, chaque phase (R, S, T) des systèmes à barres omnibus (1, 1') est subdivisée de telle manière en sections (2, 2', 2", 3, 3', 3") à deux axes longitudinaux et parallèles (12, 13), qu'entre trois dérivations successives (8, 16, 17) se situent au moins deux sections successives (2, 3) à axes longitudinaux (12, 13) différents, qu'entre deux sections voisines (2, 3) de même phase (R, S, T) sont disposés des boîtiers de liaison particuliers (4) de la forme d'un double T et également ancrés de façon fixe dans l'espace, et que dans chaque section (2, 3) des barres omnibus, et au moins à l'un des deux boîtiers de liaison (4) qui se trouvent aux extrémités, est disposé, aux deux flasques de liaison de ce boîtier de liaison (4), qui se situent dans l'axe longitudinal (12, 13) de la section (2, 3), respectivement un compensateur de la dilatation longitudinale (9) et des tirants d'ancrage (10) qui, en partant des flasques extérieurs des compensateurs de la dilatation longitudinale (9), sont en parallèle sur ces derniers et sur le boîtier de liaison (4).

2. Installation de distribution électrique haute tension à isolation par un gaz sous pression selon la revendication 1, caractérisée par le fait que la longueur des sections (2, 3) du système de barres omnibus (1) correspond à la distance entre des dérivations voisines (8, 16, 17) de phases de même nom des plages de coupure (23, 24).

3. Installation de distribution électrique haute tension à isolation par un gaz sous pression selon la revendication 1 ou 2, caractérisée par le fait que les flasques de liaison pour les boîtiers des dérivations (8) sont disposés dans la partie du boîtier de liaison (4), qui se situe dans l'axe longitudinal (12, 13) de la barre omnibus.

4. Installation de distribution électrique haute tension à isolation par un gaz sous pression selon la revendication 1, caractérisée par le fait que le boîtier de liaison (4) est constitué par une combinaison de boîtiers.

5. Installation de distribution électrique haute tension à isolation par un gaz sous pression selon la revendication 1 ou 4, caractérisée par le fait que le boîtier de liaison (4) est relié à la section (2, 3) du système de barres omnibus (1), par l'intermédiaire d'une traversée étanche (8) qui résiste à la pression et à la formation d'un arc.

6. Installation de distribution électrique haute tension à isolation par un gaz sous pression selon la revendication 1 ou 5, caractérisée par le fait que le boîtier de liaison (4) comporte également dans la barrette (7) une traversée étanche (18) qui résiste à la pression et à la formation d'un arc.

7. Installation de distribution électrique haute tension à isolation par un gaz sous pression selon la revendication 1, caractérisée par le fait que dans le cas de compensateurs de la dilatation longitudinale (9) prévus sur les boîtiers de liaison (9), de part et d'autre d'une section (2, 3), le milieu de la section (2, 3) est ancré de façon fixe dans l'espace.

8. Installation de distribution électrique haute tension à isolation par un gaz sous pression selon la revendication 1, caractérisée par le fait que dans le cas de compensateurs de la dilatation longitudinale (9), il est prévu, de part et d'autre d'une section (2, 3), et sur l'un des deux boîtiers de liaison (4), une butée de limitation (22) pour le déplacement des compensateurs de la dilatation longitudinale (9).

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16